# EUROPÄISCHE PATENTANMELDUNG

(11) **EP 2 586 985 A1**
(43) Veröffentlichungstag der Anmeldung: **01.05.2013**
(21) Anmeldenummer: 11186464.1
(22) Anmeldetag: 25.10.2011
(51) Int. Cl.: F01D 5/28, F23R 3/00

(54) **Oberfläche mit speziell ausgeformten Vertiefungen und Bauteil**

(71) Anmelder: Siemens Aktiengesellschaft, 80333 München (DE)
(72) Erfinder: Ahmad, Fathi, 41564 Kaarst (DE); Menke, Christian, 45329 Essen (DE); Paul, Uwe, 40882 Ratingen (DE)

(57) **Zusammenfassung**

Durch die besondere asymmetrische Gestaltung in einer Vertiefung (4) einer keramischen Oberfläche (19) können thermomechanisch induzierte Spannungen in der Keramik während des Betriebs einer Komponente besser abgebaut werden und damit der Rißfortschritt und die darauffolgende Abplatzung der Keramikschicht von der Komponente reduziert und sogar verhindert werden. Ebenfalls verbessert sich die Aerodynamik des Kühlluftstroms im Bereich dieser hier vorgeschlagenen Geometrien der Vertiefungen.

## Beschreibung

Die Erfindung betrifft die spezielle Ausgestaltung von länglichen Vertiefungen innerhalb einer Oberfläche und ein Bauteil.

Keramische Materialien weisen im Gegensatz zu Metallen eine geringere Duktilität auf und durch Spannungen können Risse entstehen. Insbesondere bei mit Keramik beschichteten Bauteilen, wie Gasturbinenbauteile, kann es in der keramischen Schicht zu Abplatzungen kommen. Dies passiert vor allem in Bereichen von Kühlluftbohrungsaustritten in Form von sogenannten "Shaped Holes" an der Oberfläche der Keramikschicht. Hier entstehen im Betrieb einer hohlgegossenen und gekühlten Turbinenschaufel hohe Wärmespannungen, die zum vorzeitigen Einriss der Keramikschicht und dann zum Abplatzen führen.

Deswegen werden oft Vertiefungen, wie in der WO 2009/126194 A1, eingefügt.

Es ist daher Aufgabe der Erfindung, dieses Problem zu lösen. Die Aufgabe wird gelöst durch eine Oberfläche gemäß Anspruch 1 und ein Bauteil gemäß Anspruch 12.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Bauteil mit einer Vertiefung,
- Figur 2, 3: eine spezielle Form der Vertiefung,
- Figur 4: eine Turbinenschaufel,
- Figur 5: eine Brennkammer,
- Figur 6: eine Gasturbine und
- Figur 7: eine Liste von Superlegierungen.

Die Beschreibung und die Figuren stellen nur Ausführungsbeispiele der Erfindung dar.

Die Erfindung betrifft generell Oberflächen von massiven Komponenten, Schichten, insbesondere keramische Oberflächen, aber auch Metalle, die eine gewisse Sprödigkeit aufweisen können, wie NiCoCrAlY Legierungen in einem bestimmten Temperaturbereich.

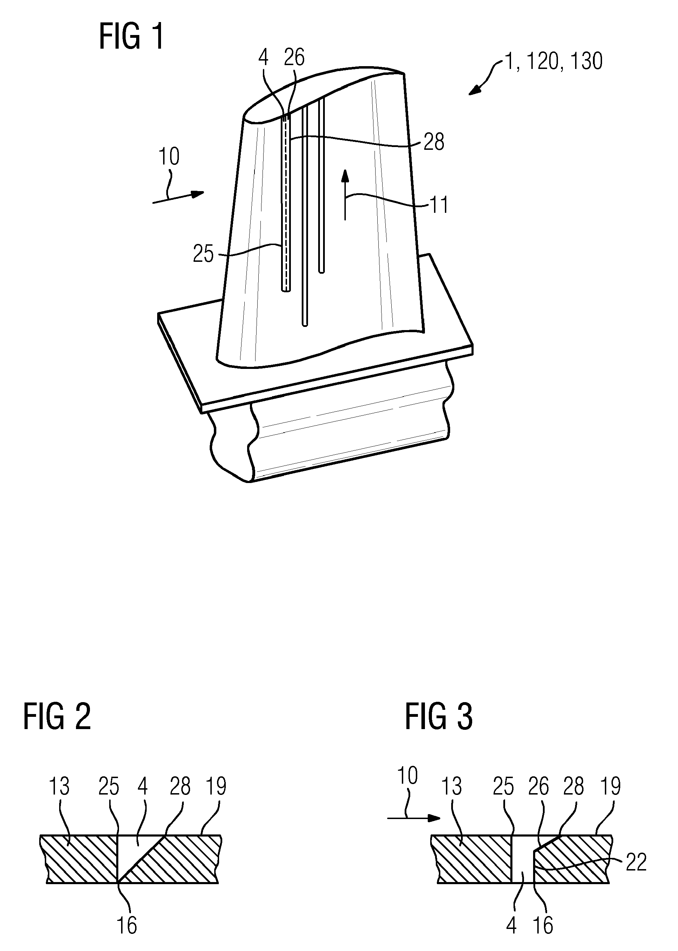

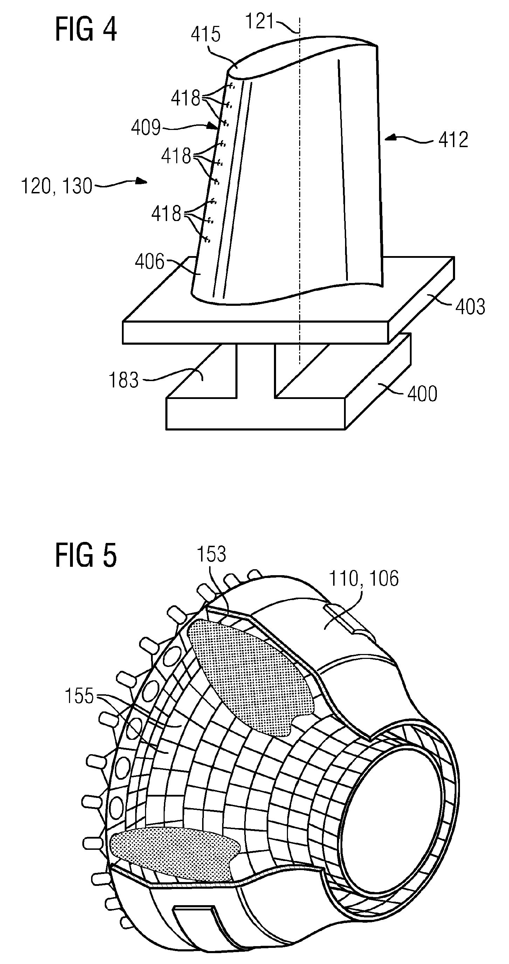

Figur 1 zeigt ein nur beispielhaftes Hochtemperaturbauteil 120, 130, 155 (Fig. 4, 5) mit einer Oberfläche 19, das in einer Überströmungsrichtung 10 umströmt wird.
Längliche Vertiefungen 4 sind nicht parallel zu einer Überströmungsrichtung 10 über die Oberfläche 19, sondern um einen deutlich von 0° verschiedenen Winkel, vorzugsweise unter einem Winkel 90° +/- 20° zur Übertragungsrichtung 10 angeordnet.
Die Vertiefungen 4 weisen eine Längsrichtung 11 auf.

Die Vertiefungen 4 werden insbesondere dort eingebracht, wo höchste thermo-mechanische Belastungen zu erwarten sind. Das ist z.B. für die Gasturbinenschaufel 120, 130 der Bereich um die Anströmkante 409 (Fig. 4) und der Bereich um die Kühlluftbohrungen.

Figur 2 zeigt einen Querschnitt durch eine Vertiefung 4, die an der Oberfläche 19 eine Vorderkante 25 und Hinterkante 28 aufweist.

Die Verbreiterung 26 ist vorzugsweise an der Hinterkante 28, also dem strömungsseitigen Ende ausgebildet.

Die Vertiefung 4 in einem Substrat oder Schicht, insbesondere keramischen Schicht 13, verbreitert sich ausgehend von dem Boden 16 bis zur Oberfläche 19, vorzugsweise stetig(Fig. 2) oder erst ab einer bestimmten Höhe 22 (Figur 3), d.h. bis zur Höhe 22 ist der Querschnitt quer zur Längsrichtung 11 der Vertiefung 4 konstant.

Die Vertiefung 4 erstreckt sich vorzugsweise nicht über die gesamte Dicke der Schicht 13 (nicht dargestellt) .

Die Vorderkante 25 verläuft vorzugsweise senkrecht zur Oberfläche eines Substrats der Schicht 13 (oder zur Oberfläche 19).

Wenn die Vorderkante 25 geneigt ist, dann in Überströmungsrichtung.

Dadurch wird das Abplatzverhalten verbessert, d.h. das Risswachstum in der Keramikschutzschicht wird gestoppt. Ebenso wird durch die Form der Vertiefung 4 die Aerodynamik einer umströmenden Kühlluft, die aus den Kühlluftlöchern strömt gegenüber herkömmlichen Vertiefungen verbessert. Auch die Oberflächentemperatur wird hier gegenüber herkömmlichen Vertiefungen reduziert. Die hier vorgeschlagenen Geometrien der Vertiefungen können z.B. durch einen Laser in die Schutzschicht 13 nachträglich eingebracht werden. Ebenso ist es möglich, die Vertiefungen 4 beim Beschichten schon zu erzeugen.

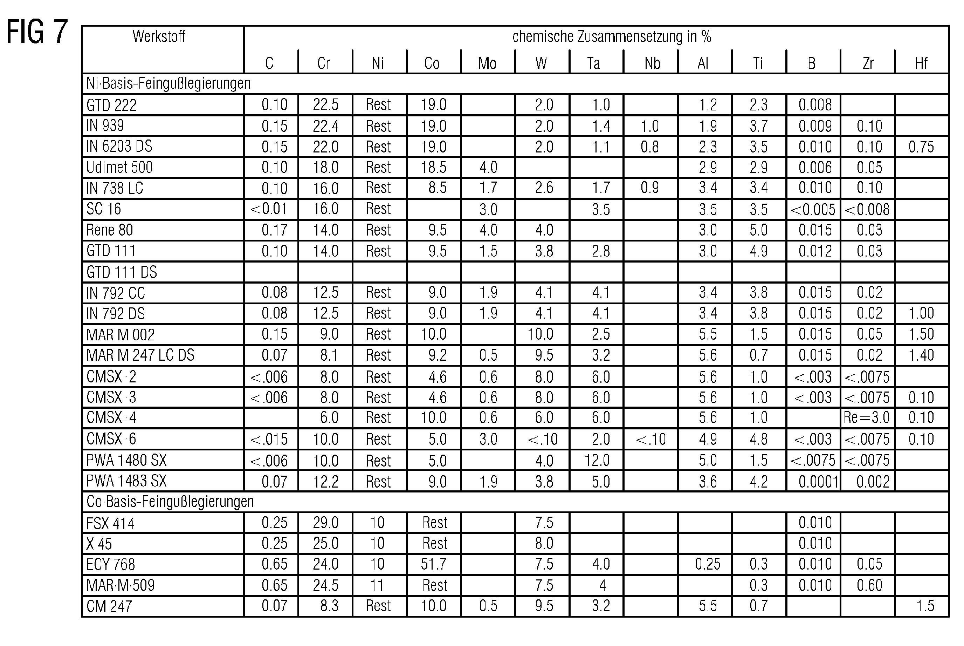

Die Turbinenschaufel 120, 130 weist vorzugsweise ein Substrat aus einer nickel- oder kobaltbasierten Superlegierung auf, insbesondere ein Material gemäß Figur 7.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10A1-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAIX kann noch eine Wärmedämmschicht vorhanden sein, die vorzugsweise die äußerste Schicht ist, und besteht beispielsweise aus ZrO₂, Y₂O-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAIX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 einer Gasturbine.

Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Jedes Hitzeschildelement 155 aus einer Legierung ist arbeitsmediumsseitig mit einer besonders hitzebeständigen Schutzschicht (MCrAIX-Schicht und/oder keramische Beschichtung) ausgestattet oder ist aus hochtemperaturbeständigem Material (massive keramische Steine) gefertigt. Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1

Auf der MCrAlX kann noch eine beispielsweise keramische Wärmedämmschicht vorhanden sein und besteht beispielsweise aus ZrO, Y₂O-ZrO2, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

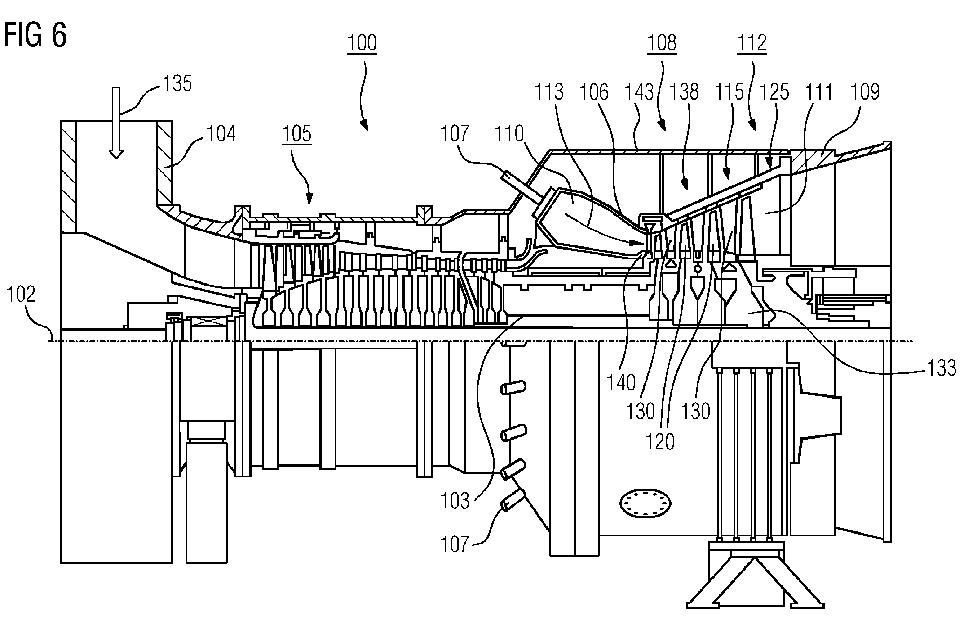

Die Figur 6 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.

An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1.

Auf der MCrAlX kann noch eine Wärmedämmschicht vorhanden sein, und besteht beispielsweise aus Zr0₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Oberfläche (19),
insbesondere keramische Oberfläche,
mit länglichen Vertiefungen (4),
die (4) eine Längsrichtung (11) aufweisen,
wobei die Vertiefungen (4) unter einem deutlich von 0° verschiedenen Winkel,
insbesondere 90° +/- 20°,
zu einer Überströmungsrichtung (10) über die Oberfläche (19) angeordnet sind und
im Bereich der Oberfläche (19) gegenüber dem Boden (16) der Vertiefung (4) quer zu ihrer Längsrichtung (11) zumindest teilweise verbreitert sind.

2. Oberfläche nach Anspruch 1,
bei dem die Verbreiterung der Vertiefung (4) ausgehend vom Boden (16) erst ab einer gewissen Höhe (22) innerhalb der Vertiefung (4) stattfindet,
und insbesondere vorher konstant breit ist.

3. Oberfläche nach Anspruch 1,
bei dem die Verbreiterung der Vertiefung (4) direkt am Boden (16) der Vertiefung beginnt.

4. Oberfläche nach einem oder mehreren der Ansprüche 1, 2 oder 3,
bei dem die Vertiefung (4) eine Vorderkante (25) und Hinterkante (28) aufweist,
bei dem die Verbreiterung (26) an der Hinterkante (28), insbesondere am abströmungsseitigen Ende ausgebildet ist.

5. Oberfläche nach einem oder mehreren der Ansprüche 1, 2 oder 4,
bei dem die Vertiefung (4) im Querschnitt quer zur Längsrichtung (11) bis zur Verbreiterung (26) zumindest stellenweise, insbesondere vollständig rechteckig ausgebildet ist.

6. Oberfläche nach einem oder mehreren der Ansprüche 1 bis 5,
wobei die Vertiefungen (4) unter einem Winkel von 90° +/-20° zu einer Überströmungsrichtung (10) über die Oberfläche (19) angeordnet sind.

7. Oberfläche nach einem oder mehreren der Ansprüche 1, 2, 3, 4, 5 oder 6,
bei dem die Vertiefung (4) entlang der Längsrichtung (11) gewellt ausgebildet ist,
insbesondere s-förmig.

8. Oberfläche nach einem oder mehreren der vorherigen Ansprüche,
bei dem die Verbreiterung (26) einen mindestens 10% größeren Querschnitt gegenüber dem Boden (16) aufweist.

9. Oberfläche nach einem oder mehreren der Ansprüche 1 bis 8,
als Oberfläche eines Massivbauteils (120, 130, 155).

10. Oberfläche nach einem oder mehreren der Ansprüche 1 bis 8,
die als keramische Schicht (13) ausgebildet ist.

11. Oberfläche nach einem oder mehreren der Ansprüche 1 bis 10,
bei dem die Vorderkante (25) sich nahezu senkrecht zur Oberfläche (19) erstreckt.

12. Bauteil (120, 130, 155) mit Oberfläche (19) nach einem oder mehreren der Ansprüche 1 bis 11.

13. Bauteil mit Schicht (13) nach einem oder mehreren der Ansprüche 1 bis 12,
bei dem sich die Vertiefung (4) nicht durch die gesamte Dicke der Schicht (13) erstreckt.
